# EUROPÄISCHE PATENTSCHRIFT

(11) **EP 0 799 373 B1**
(45) Veröffentlichungstag und Bekanntmachung des Hinweises auf die Patenterteilung: **07.01.1999**
(21) Anmeldenummer: 95935805.2
(22) Anmeldetag: 21.10.1995
(51) Int. Cl.: F02F 3/22

(54) **VERFAHREN ZUR HERSTELLUNG EINES EINTEILIGEN KÜHLKANALKOLBENS**
METHOD OF PRODUCING A ONE-PART COOLING DUCT PISTON
PROCEDE DE PRODUCTION D'UN PISTON MONOBLOC A CANAL DE REFROIDISSEMENTS

(30) Priorität: 24.12.1994 DE 4446726
(43) Veröffentlichungstag der Anmeldung: 08.10.1997
(73) Patentinhaber: Mahle GmbH, 70376 Stuttgart (DE)
(72) Erfinder: Kemnitz, Peter, D-71397 Leutenbach (DE)
(86) Internationale Anmeldenummer: DE9501481
(87) Internationale Veröffentlichungsnummer: WO9620340

(56) Entgegenhaltungen:
- DE-A- 3 643 039
- DE-A- 4 221 240
- US-A- 4 608 947

## Beschreibung

Die Erfindung betrifft ein Verfahren zur Herstellung eines einteiligen Kühlkanalkolbens mit den Merkmalen nach dem Anspruch 1.

Ein derartiger aus Stahl im Gießverfahren hergestellter Kolben ist aus der Praxis bekannt. Um hierbei einen geschlossenen Kühlkanal zu erhalten, müssen auslösbare Gießkerne verwendet werden, die das Herstellungsverfahren verkomplizieren und verteuern.

Ein einteiliger Kühlkanalkolben ist auch aus der US-A-4608947 bekannt, in der jedoch nichts über das Herstellungsverfahren ausgesagt ist.

Vorliegende Erfindung beschäftigt sich mit dem Problem, auf konstruktiv einfache Weise einen einteiligen Kühlkanalkolben herzustellen, der einen geschlossenen Kühlkanal aufweist.

Gelöst wird dieses Problem mit einem Verfahren zur Herstellung eines einteiligen Kühlkanalkolbens mit den Merkmalen nach dem Kennzeichen des Anspruchs 1.

Vorteilhafte Ausgestaltungen nach der Erfindung sind in den Unteransprüchen enthalten.

Zum Stand der Technik ist noch auf die Ausführung eines Gelenkkolbens (Pendelschaftkolben) hinzuweisen, bei dem der Kolbenkopf getrennt vom Kolbenschaft nur über den Kolbenbolzen mit diesem verbunden ist (siehe beispielsweise DE-OS 36 43 039). Bei einem derartigen Gelenkkolben ist im Kolbenkopf ein nach unten offener Kühlkanal vorgesehen, der durch einen geteilten Blechring verschlossen ist. Die Herstellung eines derartigen Kühlkanals ist nur durch die Zweiteilung des Kolbens möglich, was jedoch zu einem erhöhten Aufwand bei der Fertigung des Gelenkkolbens führt, da z.B. der Kolbenschaft getrennt zusätzlich bearbeitet werden muß. Außerdem benötigt dieser Gelenkkolben gegenüber dem einteiligen Kolben nach der Erfindung einen längeren Kolbenbolzen, wodurch das Gewicht erhöht wird.

Ein nach dem erfindungsgemäßen Verfahren hergestellter einteiliger Kühlkanalkolben ist nachstehend anhand eines bevorzugten, in der Zeichnung dargestellten Ausführungsbeispiels näher erläutert.

Es zeigt
- Fig. 1: einen erfindungsgemäßen Kolbenrohling in Seitenansicht im Schnitt,
- Fig. 2: eine Unteransicht des Kolbenrohlings,
- Fig. 3: einen fertigbearbeiteten Kolben in Seitenansicht im Teilschnitt,
- Fig. 4: eine Unteransicht des fertigbearbeiteten Kolbens tlw. im Schnitt.

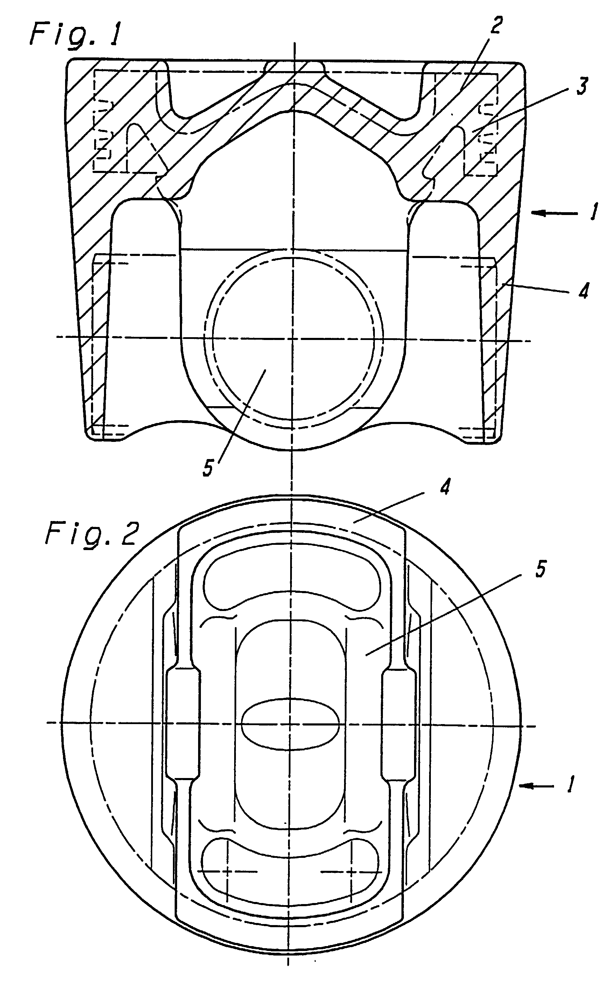

In der Fig. 1 und 2 ist ein einteiliger Kolbenrohling 1 dargestellt, der nach einem bekannten Gesenkschmiedeverfahren hergestellt ist. Mit strichpunktierten Linien ist die Kontur des fertigen Kolbens angedeutet. Der Kolbenrohling 1 umfaßt einen Kolbenkopf 2 mit dem späteren Kolbenringband 3, einen Kolbenschaft 4 und an den Kolbenkopf 2 angehängte Kolbennaben 5 und kann aus einem schmiedbaren Stahl oder einer Al-Legierung hergestellt sein.

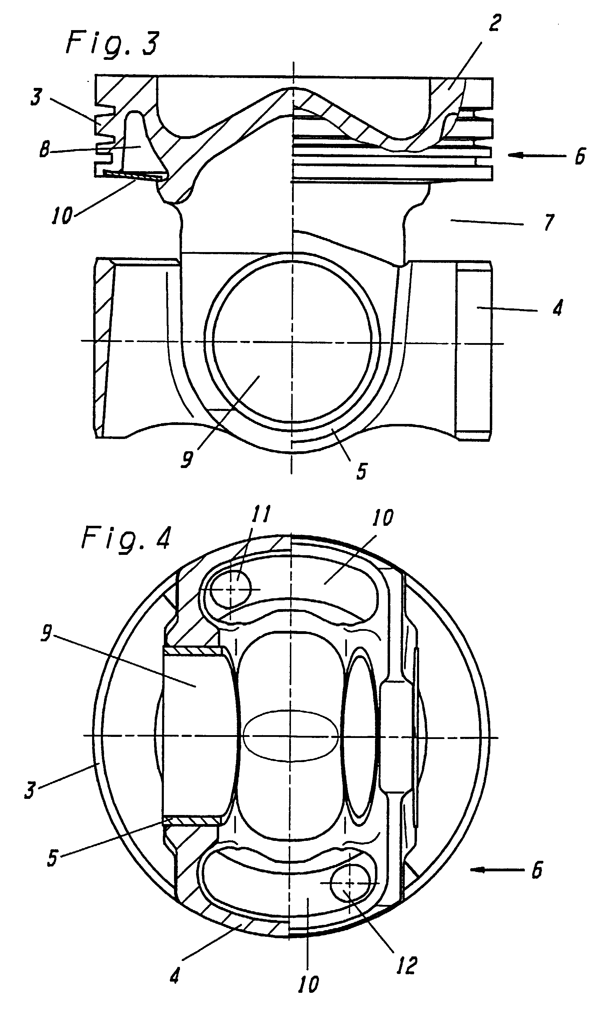

In der Fig. 3 und 4 ist der nach dem erfindungsgemäßen Verfahren hergestellte fertigbearbeitete Kolben 6 dargestellt. In einem ersten Verfahrensschritt wird bei dem Kolbenrohling 1 eine ringförmige Ausnehmung 7 durch spanabhebende Bearbeitung (Drehen) angebracht, wobei deren axiale Höhe geringfügig größer als die Höhe des späteren Kühlkanals 8 ist. Hierdurch wird der Kolbenkopf 2 vom Kolbenschaft 4 so getrennt, daß der Kolbenschaft 4 nur noch über die Kolbennaben 5 mit dem Kolbenkopf 2 verbunden ist. Zur Herstellung des nach unten offenen Kühlkanals 8 wird ein hakenförmiger Drehmeißel in die Ausnehmung 7 eingeführt und durch entsprechende axiale und radiale Zustellung der Kühlkanal 8 mit seiner gewünschten Form ausgedreht. Anschließend werden Nabenbohrungen 9 in bekannter Weise eingebracht und die Außenkontur des Kolbens 6 spanabhebend fertigbearbeitet.

Zum Verschließen des nach unten offenen Kühlkanals 8 wird ein zweigeteilter Abdeckring 10 (z.B. eine geteilte Tellerfeder) vorgespannt in entsprechende Auflager am Kolbenkopf 2 eingebracht. Der Abdeckring 10 ist mit einer Zuführ- 11 und einer Abführöffnung 12 für das Kühlöl versehen.

Mit einem derartigen Verfahren wird auf kostengünstige Weise ein einteiliger Kolben mit geschlossenem Kühlkanal hergestellt, der aufgrund seiner freien Werkstoffwahl - geschmiedeter Stahl oder schmiedbare Al-Legierung - gegenüber im Gießverfahren hergestellte Kolben z.B. höhere Festigkeiten aufweist, so daß er für hochbelastete Dieselmotoren besser geeignet ist.

## Patentansprüche

1. Verfahren zur Herstellung eines einteiligen Kühlkanalkolbens, insbesondere für einen Dieselmotor, mit einem im Kolbenkopf (2) auf Höhe des Kolbenringbandes (3) ringförmig umlaufenden, geschlossenen Kühlkanal (8) und einer zwischen Kolbenringband (3) und kastenförmigem Kolbenschaft (4) vorgesehenen ringförmigen Ausnehmung (7), wobei der Kolbenschaft (4) mit den am Kolbenkopf (2) angehängten Kolbennaben (5) verbunden ist,
**gekennzeichnet** durch folgende Merkmale:
- ein Kolbenrohling (1) wird im Schmiedeverfahren hergestellt,
- die ringförmige Ausnehmung (7) wird durch spanabhebende Bearbeitung angebracht,
- der nach unten offene Kühlkanal (8) wird mittels spanabhebender Bearbeitung eingebracht,
- Nabenbohrungen (9) werden angebracht und die Außenkontur des Kolbens (6) fertigbearbeitet,
- der unten offene Kühlkanal (8) wird durch einen Abdeckring (10) verschlossen.

2. Verfahren nach Anspruch 1,
dadurch **gekennzeichnet,**
daß die axiale Höhe der ringförmigen Ausnehmung (7) mindestens der axialen Höhe des Kühlkanals entspricht.

3. Verfahren nach Anspruch 1 oder 2,
dadurch **gekennzeichnet,**
daß der Abdeckring (10) zweigeteilt ist.

4. Verfahren nach einem der vorhergehenden Ansprüche,
dadurch **gekennzeichnet,**
daß zur Herstellung des Kühlkanals (8) ein hakenförmiger Drehmeißel verwendet wird.

5. Verfahren nach einem der vorhergehenden Ansprüche,
dadurch **gekennzeichnet,**
daß als Kolbenmaterial ein schmiedbarer warmfester Stahl verwendet wird.

6. Verfahren nach einem der vorhergehenden Ansprüche,
dadurch **gekennzeichnet,**
daß als Kolbenmaterial eine schmiedbare Al-Legierung verwendet wird.

## Claims

1. Process for the production of a single-piece cooling duct piston, in particular for a diesel engine, with a closed cooling duct (8) running in the shape of a ring in the piston head (2) at the level of the piston ring band (3) and an annular recess (7) provided between the piston ring band (3) and the box-shaped piston shaft (4), whereby the piston shaft (4) is connected to the piston hub (5) fixed to the piston head (2), characterised by the following features:
- a piston blank (1) is produced by the forging process,
- an annular recess (7) is added by machining,
- the cooling duct (8) open at the bottom is machined in,
- hub bores (9) are added and the outer contour of the piston (6) is finished,
- the cooling duct (8) open at the bottom is closed by a covering ring (10).

2. Process according to Claim 1, characterised in that the axial height of the annular recess (7) corresponds at least to the axial height of the cooling duct.

3. Process according to Claim 1 or 2, characterised in that the covering ring (10) is in two parts.

4. Process according to one of the preceding claims, characterised in that a hook-shaped turning chisel is used to produce the cooling duct (8).

5. Process according to one of the preceding claims, characterised in that a forgeable creep-resistant steel is used as piston material.

6. Process according to one of the preceding claims, characterised in that a forgeable Al-alloy is used as piston material.

## Revendications

1. Procédé de fabrication d'un piston monobloc à canal de refroidissement, en particulier pour moteur diesel, comportant un canal de refroidissement fermé (8) s'étendant annulairement dans la tête (2) du piston à la hauteur de la bande à segments (3) et un évidement annulaire (7) prévu entre la bande à segments (3) et le fût en forme de caisson (4) du piston, le fût (4) du piston étant joint au moyeu (5) du piston attaché à la tête (2) du piston, caractérisé par les caractéristiques suivantes :
- une ébauche de piston (1) est fabriquée par forgeage,
- l'évidement annulaire (7) est fait par usinage par enlèvement de matière,
- le canal de refroidissement ouvert vers le bas (8) est fait par usinage par enlèvement de matière,
- des trous (9) sont faits dans le moyeu et le contour extérieur du piston (6) est fini,
- le canal de refroidissement ouvert en bas (8) est fermé au moyen d'un anneau de fermeture (10).

2. Procédé selon la revendication 1, caractérisé par le fait que la hauteur axiale de l'évidement annulaire (7) correspond au moins à la hauteur axiale du canal de refroidissement.

3. Procédé selon l'une des revendications 1 et 2, caractérisé par le fait que l'anneau de fermeture (10) est divisé en deux.

4. Procédé selon l'une des revendications précédentes, caractérisé par le fait que pour la réalisation du canal de refroidissement (8) est utilisé un outil de tournage en forme de crochet.

5. Procédé selon l'une des revendications précédentes, caractérisé par le fait que comme matière pour le piston est utilisé un acier réfractaire forgeable.

6. Procédé selon l'une des revendications précédentes, caractérisé par le fait que comme matière pour le piston est utilisé un alliage d'aluminium forgeable.
